# EUROPEAN PATENT APPLICATION

(11) **EP 4 790 638 A2**
(43) Date of publication of application: **12.08.2026**
(21) Application number: 26188113.0
(22) Date of filing: 26.06.2026
(51) Int. Cl.: G06T 5/60, G06T 5/70, G01S 17/00

(54) **DEPTH DETECTION METHOD, APPARATUS, DEPTH DETECTION SYSTEM, AND ELECTRONIC DEVICE**

(30) Priority: 27.03.2026 CN 202610398106
(71) Applicant: XG TECH PTE. LTD., Singapore 179098 (SG)
(72) Inventor: LIN, Wei, 179098 Singapore (SG); LIU, Gang, 179098 Singapore (SG)
(74) Representative: Patentanwälte Magenbauer & Kollegen Partnerschaft mbB

(57) **Abstract**

The present disclosure provides a depth detection method, an apparatus, a depth detection system, and an electronic device. The method includes: The present disclosure provides a depth detection method, a depth detection system, and an electronic device. The method includes: obtaining a to-be-denoised photon statistics map generated for a target scene, wherein for any pixel in the to-be-denoised photon statistics map corresponding to a photon statistics data sequence; encoding the to-be-denoised photon statistics map using an encoder included in a pre-trained denoising model to obtain encoded data; performing computation on the encoded data using a bottleneck layer included in the denoising model to obtain to-be-decoded data; decoding the to-be-decoded data using a decoder included in the denoising model to obtain a denoised photon statistics map; and generating a depth map corresponding to the target scene based on peak data corresponding to pixels in the denoised photon statistics map.

## Description

### FIELD OF THE PRESENT DISCLOSURE

The present disclosure relates to computer vision technologies, and in particular, to a depth detection method, an apparatus, a depth detection system, and an electronic device.

### BACKGROUND OF THE PRESENT DISCLOSURE

dToF (direct Time-of-Flight) ranging is a distance measurement technology based on flight time of photon. The core principle is to calculate the distance by computing the time difference between emission and reception of an optical signal.

The processing flow of dToF ranging centers on constructing and analyzing histograms. For each pixel in the measured scene, the system performs thousands to millions of "emission-detection" cycles. Each time a photon is detected, its flight time t is recorded and accumulated into a corresponding time bin. Eventually, each pixel yields a time-photon count histogram. After the histogram is obtained, the related dToF ranging process fails to accurately detect distances for some special scenes, such as corners in a space and edges of objects, resulting in ranging failure.

### SUMMARY OF THE PRESENT DISCLOSURE

To solve the above technical problems, the present disclosure provides a depth detection method, an apparatus, a depth detection system, and an electronic device, so as to improve ranging accuracy and scene adaptability.

In a first aspect of the embodiments of the present disclosure, there is provided a depth detection method, comprising: obtaining a to-be-denoised photon statistics map generated for a target scene, wherein for any pixel in the to-be-denoised photon statistics map corresponding to a photon statistics data sequence, photon statistics data in the photon statistics data sequence is used to characterize a number of reflected photons obtained by counting the reflected photons received at a corresponding time point from a target position, being a position corresponding to the pixel in the target scene; encoding the to-be-denoised photon statistics map using an encoder included in a pre-trained denoising model to obtain encoded data; performing computation on the encoded data using a bottleneck layer included in the denoising model to obtain to-be-decoded data; decoding the to-be-decoded data using a decoder included in the denoising model to obtain a denoised photon statistics map; and generating a depth map corresponding to the target scene based on peak data corresponding to pixels in the denoised photon statistics map.

In a second aspect of the embodiments of the present disclosure, there is provided a depth detection apparatus, comprising: an obtaining module, configured to obtain a to-be-denoised photon statistics map generated for a target scene, wherein for any pixel in the to-be-denoised photon statistics mapl corresponding to a photon statistics data sequence, photon statistics data in the photon statistics data sequence is used to characterize a number of reflected photons obtained by counting the reflected photons received at a corresponding time point from a target position being a position corresponding to the pixel in the target scene; an encoding module, configured to encode the to-be-denoised photon statistics map using an encoder included in a pre-trained denoising model to obtain encoded data; a computation module, configured to perform computation on the encoded data using a bottleneck layer included in the denoising model to obtain to-be-decoded data; a decoding module, configured to decode the to-be-decoded data using a decoder included in the denoising model to obtain a denoised photon statistics map; and a generation module, configured to generate a depth map corresponding to the target scene based on peak data corresponding to pixels in the denoised photon statistics map.

In a third aspect of the embodiments of the present disclosure, there is provided a depth detection system, comprising: a photon time-of-flight detection device and a controller, the photon time-of-flight detection device and the controller being communicatively connected; the photon time-of-flight detection device is configured to collect a number of reflected photons for a target scene, and generate a to-be-denoised photon statistics map based on the number of the reflected photons; and the controller is configured to execute the above depth detection method based on the to-be-denoised photon statistics map.

In a fourth aspect of the embodiments of the present disclosure, there is provided a computer-readable storage medium, storing a computer program thereon, which, when executed, is used to implement the above depth detection method.

In a fifth aspect of the embodiments of the present disclosure, there is provided an electronic device, the electronic device comprising: a processor; and a memory for storing executable instructions of the processor; wherein the processor is configured to read executable instructions from the memory and execute the instructions to implement the above depth detection method.

In a sixth aspect of the embodiments of the present disclosure, there is provided a computer program product, comprising computer program instructions which, when executed by an instruction processor, causes the instruction processor to execute the above depth detection method.

Based on the depth detection method, apparatus, depth detection system, and electronic device in accordance with the embodiments of the present disclosure, by generating a to-be-denoised photon statistics map for a target scene, processing the to-be-denoised photon statistics map using the encoder, bottleneck layer, and decoder included in the pre-trained denoising model to obtain a denoised photon statistics map, and finally generating the depth map corresponding to the target scene based on the peak data corresponding to pixels in the denoised photon statistics map, in the embodiments of the present disclosure, based on the denoising model with an encoder-decoder structure, multi-scale features of the to-be-denoised photon statistics map may be fully extracted and detail information may be preserved, thereby effectively suppressing noise and correct errors caused by multipath interference during photon flight, and eliminating interference signals generated at various positions such as corners in a space and edges of objects, enabling more accurate denoising of the photon statistics map, and further improving the accuracy of the depth map generated for the target scene.

### BRIEF DESCRIPTION OF THE DRAWINGS

FIG. 1 is a schematic flowchart of a depth detection method in accordance with an exemplary embodiment of the present disclosure;
FIG. 2 is a schematic structural diagram of a denoising model in accordance with an exemplary embodiment of the present disclosure;
FIG. 3 is a schematic comparison diagram of histograms before and after denoising in accordance with an exemplary embodiment of the present disclosure;
FIG. 4 is a schematic flowchart of a depth detection method in accordance with another exemplary embodiment of the present disclosure;
FIG. 5 is a schematic flowchart of a depth detection method in accordance with yet another exemplary embodiment of the present disclosure;
FIG. 6 is a schematic flowchart of a training process of a denoising model in accordance with an exemplary embodiment of the present disclosure;
FIG. 7 is a schematic flowchart of a training process of a denoising model in accordance with another exemplary embodiment of the present disclosure;
FIG. 8 is a structural diagram of a depth detection apparatus in accordance with an exemplary embodiment of the present disclosure;
FIG. 9 is a structural diagram of a depth detection apparatus in accordance with another exemplary embodiment of the present disclosure;
FIG. 10 is a structural diagram of a depth detection system in accordance with an exemplary embodiment of the present disclosure; and
FIG. 11 is a structural diagram of an electronic device in accordance with an exemplary embodiment of the present disclosure.

### DESCRIPTION OF THE EMBODIMENTS

Hereinafter, example embodiments according to the present disclosure will be described in detail with reference to the accompanying drawings. Obviously, the described embodiments are only part of the embodiments of the present disclosure, not all embodiments of the present disclosure, and it should be understood that the present disclosure is not limited to the example embodiments described herein.

It should be noted that, unless otherwise specifically stated, the relative arrangements of components and steps, numerical expressions, and numerical values set forth in these embodiments do not limit the scope of the present disclosure.

### Application Overview

In related dToF-based ranging technologies, for some special scenes, such as corners in a space and edges of objects, the collected data has relatively large noise, making it impossible to extract detail features of spatial positions therefrom, which leads to inaccurate distance detection and ranging failure.

To solve the above problem, in the embodiments of the present disclosure, a pre-trained denoising model based on an encoder-decoder structure is use, by which multi-scale features of the to-be-denoised photon statistics map may be fully extracted and detail information may be preserved, thereby effectively suppressing noise and correct errors caused by multipath interference in photon flight, and eliminating interference signals generated at various positions such as corners in a space and edges of objects, enabling more accurate denoising of the photon statistics map, and further improving the accuracy of the depth map generated for the target scene.

### Exemplary Method

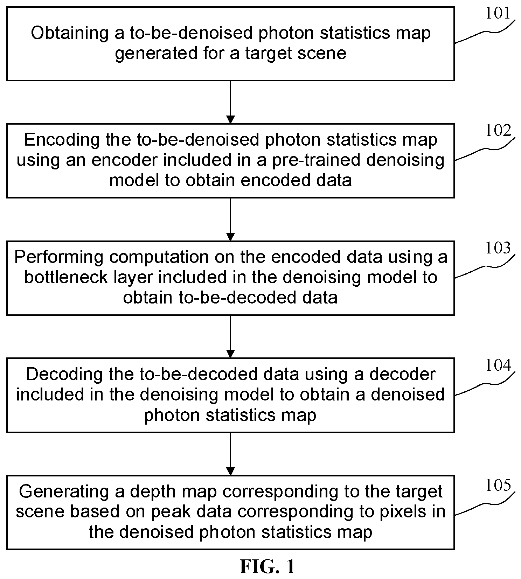

FIG. 1 is a schematic flowchart of a depth detection method in accordance with an exemplary embodiment of the present disclosure. This embodiment is applicable to an electronic device. As shown in FIG. 1, the method includes the following steps:

Step 101: Obtaining a to-be-denoised photon statistics map generated for a target scene.

The to-be-denoised photon statistics map may be collected by a dToF lidar system. The above to-be-denoised photon statistics map may reflect the flight time of photon corresponding to each pixel in a two-dimensional image mapped from the target scene, where the flight time of photon is the time elapsed from emission of a photon by a laser emitter, reflection by an object in the target scene, and reception by a photoelectric sensor.

The dToF lidar system works as follows: a laser emitter emits an extremely brief optical pulse. A Single Photon Avalanche Diode (SPAD) sensor detects photons reflected back from various objects in the scene. For each detected photon, a Time to Digital Converter (TDC) precisely records the time from emission to reception. The scene is mapped to a two-dimensional image, and in the two-dimensional image, the number of received photons is counted for each pixel corresponding to each scanned position, thereby obtaining the photon statistics map.

For any pixel in the to-be-denoised photon statistics map, the pixel corresponds to a photon statistics data sequence. Photon statistics data in the photon statistics data sequence is used to characterize the number of reflected photons obtained by counting reflected photons received from a target position at a corresponding time point. The target position is a position corresponding to the pixel in the target scene.

Generally, for any pixel in the to-be-denoised photon statistics map, the data sequence corresponding to the pixel may constitute a time-photon count histogram. For example, a histogram corresponding to one pixel has 512 time bins, covering a measurement range of 0 to 100 nanoseconds (corresponding to a distance of 0 to 15 meters). After counting the detected photons multiple times, the data in the resulting histogram is as follows:
Time bins: [1, 2, 3, 4, 5, ..., 510, 511, 512];
Photon counts: [2, 5, 21, 105, 203, 450, 301, 98, ..., 1, 0, 3].

The peak of the histogram corresponds to the photon flight time of the position corresponding to the pixel.

Step 102: Encoding the to-be-denoised photon statistics map using an encoder included in a pre-trained denoising model to obtain encoded data.

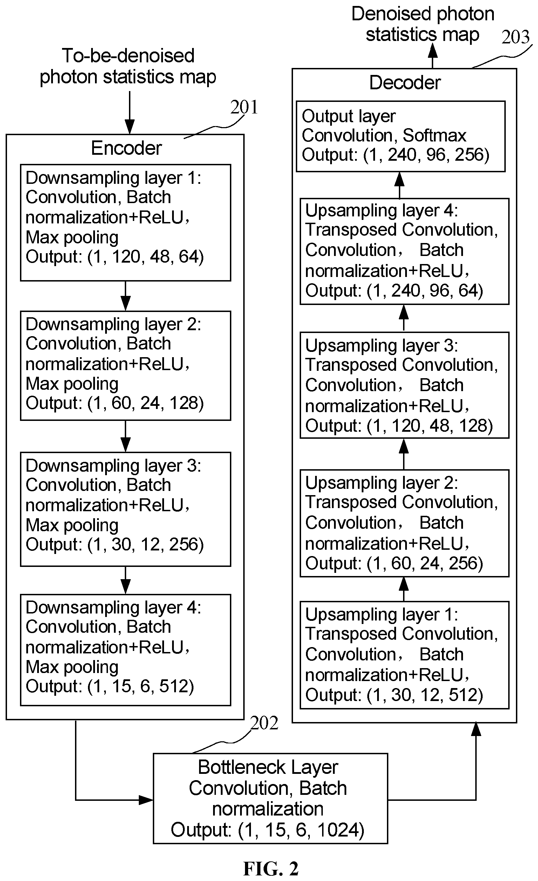

As shown in FIG. 2, the denoising model includes an encoder 201, a bottleneck layer 202, and a decoder 203. The encoder, the bottleneck layer, and the decoder may constitute a U-Net network. The encoder may include at least one encoding block, and each encoding block may include units such as at least one convolutional layer, a batch normalization layer, and an activation function layer. Through the encoder, downsampling may be performed on the to-be-denoised photon statistics map to obtain a low-resolution feature map as the encoded data. For example, the input to the encoder is a to-be-denoised photon statistics map of size 240×96×256, and the output is a feature map of size 15×6×512 as the encoded data.

Optionally, the above encoder, bottleneck layer, and decoder are serially connected with each other. That is, the bottleneck layer only receives the encoded data output by the encoder, and the decoder only receives the to-be-decoded data output by the bottleneck layer, i.e., there is no skip connection structure between the encoder and the decoder. In a typical U-Net network, encoding blocks (also referred to as downsampling layers) in the encoder and decoding blocks (also referred to as upsampling layers) in the decoder are in one-to-one correspondence. For a decoding block, the decoding block not only receives the feature map output by the upper-level decoding block or the bottleneck layer, but also receives the feature map output by the corresponding encoding block, i.e., there is a skip connection structure between the encoder and the decoder, the purpose of which is to preserve texture details of the original data during decoding. However, in this embodiment the to-be-denoised photon statistics map is processed with the purpose of accurately finding the flight time corresponding to the reflection point from the histogram corresponding to each pixel, without preserving too much information from the original data. Therefore, removing the skip connection structure may reduce redundant computation and improve data processing efficiency.

Step 103: Performing computation on the encoded data using a bottleneck layer included in the denoising model to obtain to-be-decoded data.

The bottleneck layer is used to increase the number of channels of the feature map and extract richer semantic information. For example, the input to the bottleneck layer is a feature map of size 15×6×512, and the output is a feature map of size 15×6× 1024 as the to-be-decoded data.

Step 104: Decoding the to-be-decoded data using a decoder included in the denoising model to obtain a denoised photon statistics map.

The decoder may include at least one decoding block, and each decoding block may include units such as at least one transposed convolutional layer, a convolutional layer, and a batch normalization layer. Through the decoder, upsampling may be performed on the to-be-decoded data to obtain a denoised photon statistics map having the same resolution as the to-be-denoised photon statistics map. For example, the input to the decoder is a feature map of size 15×6×1024, and the output is a denoised photon statistics map of size 240×96×256.

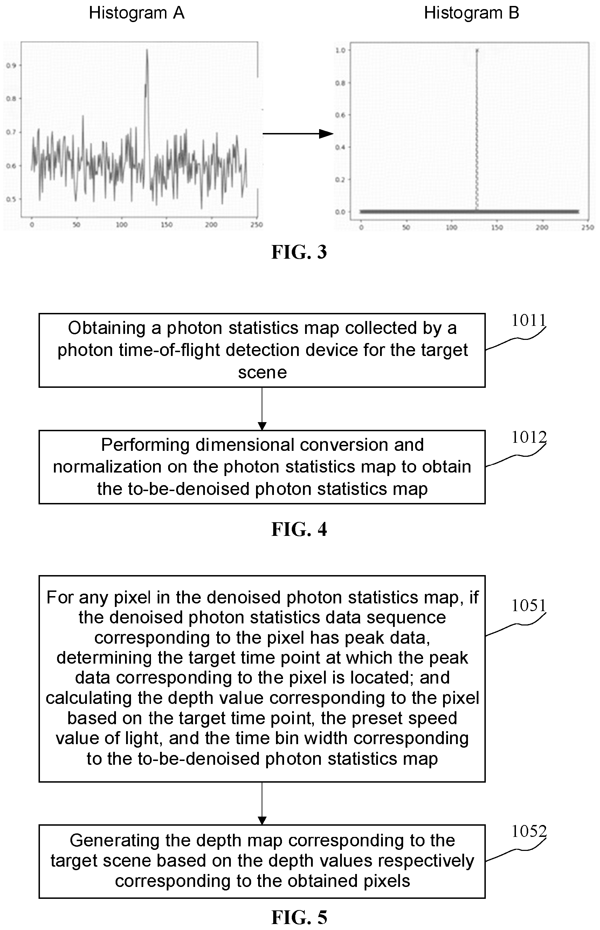

As shown in FIG. 3, the denoising model performs denoising processing on a data sequence corresponding to a certain pixel in the input (as shown in Histogram A), to obtain a denoised data sequence (as shown in Histogram B).

Step 105: Generating a depth map corresponding to the target scene based on peak data corresponding to pixels in the denoised photon statistics map.

Specifically, since the denoised photon statistics map has had noise interference removed, the time t_peak corresponding to the photon reflection for each pixel may be accurately located from the data sequence corresponding to each pixel in the denoised photon statistics map. Using the following Formula (1), the distance value corresponding to the pixel may be calculated:
$d = \left(c\times t_peak\right) / 2$
wherein d is the distance value and c is the speed of light.

After performing the above processing on the data sequence corresponding to each pixel in the denoised photon statistics map, the depth map containing the distance value corresponding to each pixel may be obtained.

The depth detection method in accordance with the embodiments of the present disclosure processes the to-be-denoised photon statistics map using the encoder, bottleneck layer, and decoder included in the pre-trained denoising model to obtain a denoised photon statistics map, and finally generates the depth map corresponding to the target scene based on the peak data corresponding to pixels in the denoised photon statistics map. In the embodiments of the present disclosure, based on the denoising model with an encoder-decoder structure, multi-scale features of the to-be-denoised photon statistics map may be fully extracted and detail information preserved, thereby effectively suppressing noise and correcting errors caused by multipath interference in photon flight, eliminating interference signals generated at various positions such as corners in a space and edges of objects, enabling more accurate denoising of the photon statistics map, and further improving the accuracy of the depth map generated for the target scene.

In some optional implementations, as shown in FIG. 4, the above step 101 includes:

Step 1011: Obtaining a photon statistics map collected by a photon time-of-flight detection device for the target scene.

The photon time-of-flight detection device is used to detect and count the number of photons reflected from each position in the target scene. For example, the photon time-of-flight detection device may be a dToF lidar system, and the collection method of the photon statistics map may refer to the above description for step 101.

Step 1012: Performing dimensional conversion and normalization on the photon statistics map to obtain the to-be-denoised photon statistics map.

The collected photon statistics map includes a plurality of pixels, each pixel corresponds to a photon statistics data sequence, and the photon statistics data sequence may constitute a histogram. The photon statistics data sequence is original data obtained by counting the number of received photons at each time bin. In order to make the data conform to the data format requirements of the denoising model, preprocessing needs to be performed on the photon statistics map, and the preprocessing includes dimensional conversion and normalization.

The dimensional conversion is used to rearrange the input photon statistics map into a format suitable for convolution processing. For example, the process of dimensional conversion is as shown in the following Formula (2):
${Input}_{4 D} = Reshape \left(Permute\left({Input}_{3 D}, \left(1, 0, 2\right)\right),\left(1, H, W, T\right)\right.$
wherein the Permute function is used to adjust the dimension order, and the Reshape function is used to add a batch dimension. Input4D represents converting the three-dimensional photon statistics map into four-dimensional data containing a batch dimension.

The process of normalization is as shown in the following Formula (3):
${Input}_{norm} \left(i, j, t\right) = \frac{Input \left(i, j, t\right)}{{max}_{t ′ = 1}^{T} Input \left(i,j,t′\right) + ϵ}$
wherein i and j represent pixel coordinates, t represents a time bin coordinate, and ε is a constant used to prevent division by zero errors. *Inputₙₒᵣₘ* is the normalized to-be-denoised photon statistics map.

This embodiment obtains a to-be-denoised photon statistics map suitable for processing by the denoising model by performing dimensional conversion and normalization on the collected photon statistics map, which helps enable the denoising model to perform denoising processing more efficiently and accurately.

In some optional implementations, the encoder comprises at least one serially connected downsampling layer, and the decoder comprises at least one serially connected upsampling layer and an output layer. As shown in FIG. 2, the encoder includes four downsampling layers, and each downsampling layer includes a plurality of convolutional layers, a plurality of batch normalization layers, and a pooling layer. The decoder includes four upsampling layers, and each upsampling layer includes a transposed convolutional layer, a plurality of convolutional layers, a plurality of batch normalization layers, and a plurality of activation function (ReLU) layers.

The above step 102 includes:
Performing layer-by-layer downsampling on the to-be-denoised photon statistics map using the at least one downsampling layer to obtain the encoded data.

As shown in FIG. 2, the input to the encoder is a to-be-denoised photon statistics map of size 240×96×256. After layer-by-layer downsampling through four downsampling layers, a feature map of size 15×6×512 is obtained as the encoded data.

The above step 103 includes:
Performing layer-by-layer upsampling on the to-be-decoded data using the at least one upsampling layer to obtain the denoised photon statistics map.

As shown in FIG. 2, the input to the bottleneck layer is a feature map of size 15×6×512. After multiple rounds of convolution and batch normalization, a feature map of size 15×6×1024 is output as the to-be-decoded data. The to-be-decoded data is input to the decoder, and after layer-by-layer upsampling through four upsampling layers and processing through a convolutional layer and a Softmax activation function in the output layer included in the decoder, a denoised photon statistics map of size 240×96×256 is obtained.

In this embodiment, through the serial processing manner in the encoder and decoder, each downsampling layer and upsampling layer only receives data output by the upper-level network for processing, without adopting skip connections for cross-layer processing, thereby focusing the data processing of the model on the denoising of the photon statistics map, without preserving original information in the photon statistics map, and improving the efficiency and accuracy of denoising the photon statistics map.

In some optional implementations, as shown in FIG. 5, step 105 includes:
Step 1051: For any pixel in the denoised photon statistics map, if the denoised photon statistics data sequence corresponding to the pixel has peak data, determining the target time point at which the peak data corresponding to the pixel is located; and calculating the depth value corresponding to the pixel based on the target time point, the preset speed value of light, and the time bin width corresponding to the to-be-denoised photon statistics map.

Specifically, since the denoised photon statistics map has undergone denoising processing, it is possible to directly determine from the denoised photon statistics data sequence corresponding to pixels in the denoised photon statistics map whether peak data exists. For example, if the difference between the maximum value and the minimum value (or the mean of data other than the peak) in the histogram corresponding to the denoised photon statistics data sequence exceeds a preset threshold, it is determined that peak data exists, i.e., the maximum value is the peak data. The time bin corresponding to the peak data is the target time point. Optionally, the target time point may also be calculated using the centroid method. The method of calculating the target time point corresponding to the peak using the centroid method is as shown in the following Formula (4):
${t}_{peak} \left(i, j\right) = \frac{{\sum }_{t - 1}^{256} t ⋅ Output \left(i, j, t\right)}{{\sum }_{t - 1}^{256} Output \left(i, j, t\right)}$
wherein Output(i, j, t) is the value at time bin t in the photon statistics data sequence corresponding to the pixel at coordinates (i, j).

The above time bin width is the actual duration corresponding to two adjacent time bins in the histogram. For example, a histogram of one pixel has 512 time bins covering a measurement range of 0 to 100 nanoseconds, and the time bin width is 100/511 nanoseconds.

Multiplying the target time point by the time bin width yields the time for the photon to travel from emission to return. Multiplying this by the speed of light yields the distance between the target reflection point and the photon emitting device, and this distance may serve as a depth value.

Step 1052: Generating the depth map corresponding to the target scene based on the depth values respectively corresponding to the obtained pixels.

Combining the obtained depth values yields the depth map.

This embodiment achieves, based on the denoised photon statistics map, the determination of the accurate photon round-trip time corresponding to pixels having peak data, and calculates the depth value based on this time, which may improve the accuracy of generating the depth map.

In some optional implementations, in step 1051, the depth value may be calculated according to the following steps:
Determining a time difference between the target time point and a preset time offset; and calculating the depth value corresponding to the pixel based on the time difference, the speed value of light, and the time bin width.

The above time offset is an inherent time offset of the electronic device executing this method.

The formula for calculating the depth value based on the time difference, the speed value of light, and the time bin width is as shown in the following Formula (5):
$d \left(i, j\right) = \frac{c ⋅ \left({t}_{pteak}\left(i, j\right)-{t}_{offset}\right) ⋅ Δt}{2}$
wherein *t_{offset}* is the time offset and Δt is the time bin width.

This embodiment subtracts the time offset from the target time point to remove the influence factor of the inherent time offset of the device, thereby achieving higher accuracy in calculating the photon round-trip time, and further improving the accuracy of calculating the depth value.

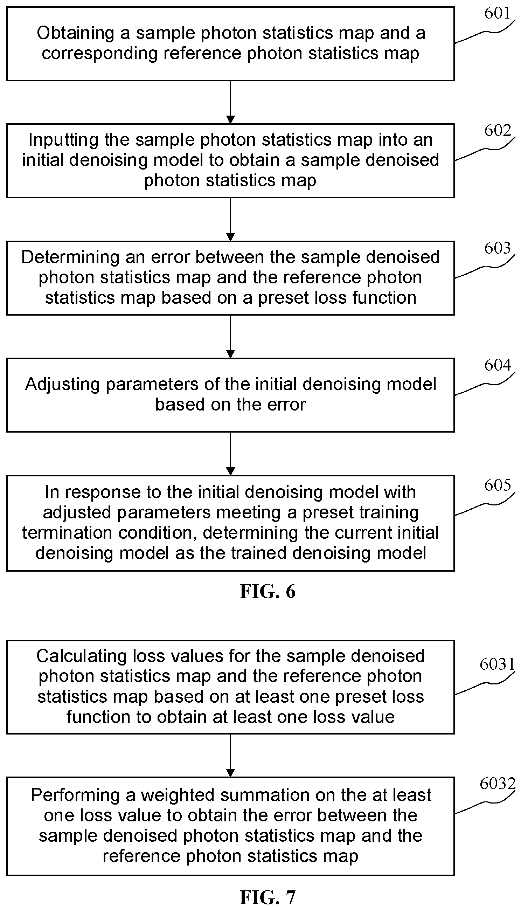

In some optional implementations, as shown in FIG. 6, the denoising model is pre-trained according to the following steps:
Step 601: Obtaining a sample photon statistics map and a corresponding reference photon statistics map.

The reference photon statistics map is a photon statistics map generated by annotating actual positions of objects in a sample scene. That is, the photon statistics data sequence corresponding to pixels in the reference photon statistics map is a photon statistics map reflecting the actual positions of objects after calibration using real objects.

Step 602: Inputting the sample photon statistics map into an initial denoising model to obtain a sample denoised photon statistics map.

The structure and data processing procedure of the initial denoising model may refer to the above embodiments.

Step 603: Determining an error between the sample denoised photon statistics map and the reference photon statistics map based on a preset loss function.

The type of the loss function may be preset. For example, the loss function may be a mean squared error loss function, and the resulting mean squared error loss is used to represent the error between the sample denoised photon statistics map and the reference photon statistics map.

Step 604: Adjusting parameters of the initial denoising model based on the error.

Specifically, machine learning methods may be adopted to adjust the parameters of the initial denoising model through backpropagation and gradient descent, so that the loss value gradually decreases to convergence.

Step 605: In response to the initial denoising model with adjusted parameters meeting a preset training termination condition, determining the current initial denoising model as the trained denoising model.

Optionally, the above training termination condition includes but is not limited to at least one of the following: convergence of the loss value, the number of training iterations exceeding a preset number, and the training duration exceeding a preset duration. Generally, training a model requires a large amount of sample data and training through multiple iterations to obtain the denoising model. Therefore, by using multiple sets of training data and repeatedly iterating through the steps of this embodiment multiple times, the trained denoising model may be obtained.

This embodiment pre-collects sample data to train the denoising model, which may target the actual application scenarios of depth maps and train a denoising model that meets denoising requirements in a targeted manner, thereby improving the accuracy of denoising the photon statistics map.

In some optional implementations, as shown in FIG. 7, the above step 603 includes:
Step 6031: Calculating loss values for the sample denoised photon statistics map and the reference photon statistics map based on at least one preset loss function to obtain at least one loss value.

Wherein, the at least one loss function includes at least one of: a main task loss function, a distribution similarity loss function, a sparsity loss function, and a physical prior constraint loss function.

Wherein, the main task loss function is mainly used to determine the ranging error, and a mean squared error loss function, a Huber loss function, or the like may be selected.

The distribution similarity loss function may adopt a KL divergence loss function, a maximum mean discrepancy loss function, or the like, and is used to reduce data distribution errors.

The sparsity loss function may adopt a temporal dimension sparsity loss function, an adaptive sparsity loss function, or the like, and is used to introduce sparsity constraints to promote the model to automatically screen out key features or parameters.

The physical prior constraint loss function is used to incorporate physical laws of the real world into the calculation of loss values, thereby improving the generalization capability, physical consistency, and interpretability of the model.

Step 6032: Performing a weighted summation on the at least one loss value to obtain the error between the sample denoised photon statistics map and the reference photon statistics map.

The weight corresponding to each loss value may be preset according to actual requirements.

This embodiment uses at least one loss function for model training, achieving reference to errors from multiple aspects to adjust model parameters, thereby further improving the data processing accuracy of the trained model and making the denoised photon statistics map output by the model more accurate.

### Exemplary Apparatus

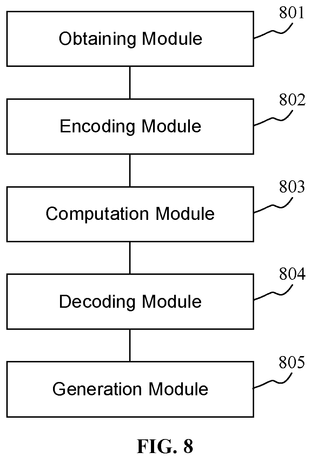

FIG. 8 is a schematic structural diagram of a depth detection apparatus in accordance with an exemplary embodiment of the present disclosure. This embodiment is applicable to an electronic device. As shown in FIG. 8, the depth detection apparatus includes:
an obtaining module 801, configured to obtain a to-be-denoised photon statistics map generated for a target scene, wherein for any pixel in the to-be-denoised photon statistics map corresponding to a photon statistics data sequence, photon statistics data in the photon statistics data sequence is used to characterize a number of reflected photons obtained by counting the reflected photons received at a corresponding time point from a target position being a position corresponding to the pixel in the target scene;
an encoding module 802, configured to encode the to-be-denoised photon statistics map using an encoder included in a pre-trained denoising model to obtain encoded data;
a computation module 803, configured to perform computation on the encoded data using a bottleneck layer included in the denoising model to obtain to-be-decoded data;
a decoding module 804, configured to decode the to-be-decoded data using a decoder included in the denoising model to obtain a denoised photon statistics map; and
a generation module 805, configured to generate a depth map corresponding to the target scene based on peak data corresponding to pixels in the denoised photon statistics map.

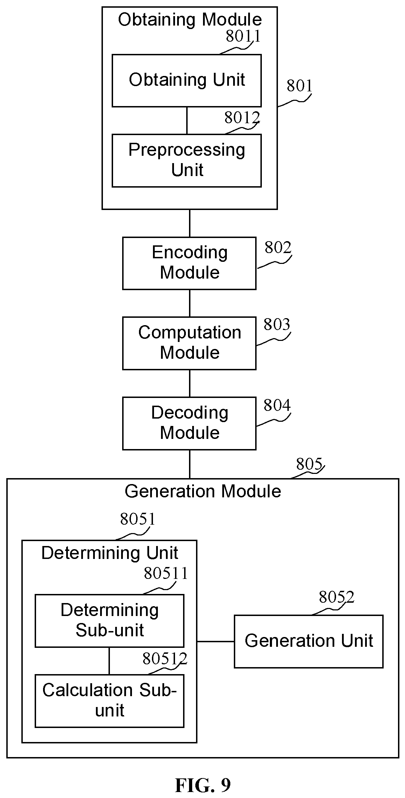

Referring to FIG. 9, FIG. 9 is a schematic structural diagram of a depth detection apparatus in accordance with another exemplary embodiment of the present disclosure.

In some optional implementations, the obtaining module 801 includes: an obtaining unit 8011, configured to obtain a photon statistics map collected by a photon time-of-flight detection device for the target scene; and a preprocessing unit 8012, configured to perform dimensional conversion and normalization on the photon statistics map to obtain the to-be-denoised photon statistics map.

In some optional implementations, the encoder, the bottleneck layer, and the decoder are serially connected with each other.

In some optional implementations, the encoder comprises at least one serially connected downsampling layer, and the decoder comprises at least one serially connected upsampling layer and an output layer; the encoding module 802 is further configured to: perform layer-by-layer downsampling on the to-be-denoised photon statistics map using the at least one downsampling layer to obtain the encoded data; and the decoding module 804 is further configured to: perform layer-by-layer upsampling on the to-be-decoded data using the at least one upsampling layer to obtain the denoised photon statistics map.

In some optional implementations, the generation module 805 includes: a determining unit 8051, configured to, for any pixel in the denoised photon statistics map, if the denoised photon statistics data sequence corresponding to the pixel has peak data, determine the target time point at which the peak data corresponding to the pixel is located, and calculate the depth value corresponding to the pixel based on the target time point, the preset speed value of light, and the time bin width corresponding to the to-be-denoised photon statistics map; and a generation unit 8052, configured to generate the depth map corresponding to the target scene based on the depth values respectively corresponding to the obtained pixels.

In some optional implementations, the determining unit 8051 includes: a determining sub-unit 80511, configured to determine a time difference between the target time point and a preset time offset; and a calculation sub-unit 80512, configured to calculate the depth value corresponding to the pixel based on the time difference, the speed value of light, and the time bin width.

In some optional implementations, the denoising model is pre-trained according to the following steps: obtaining a sample photon statistics map and a corresponding reference photon statistics map, wherein the reference photon statistics map is a photon statistics map generated by annotating actual positions of objects in a sample scene; inputting the sample photon statistics map into an initial denoising model to obtain a sample denoised photon statistics map; determining an error between the sample denoised photon statistics map and the reference photon statistics map based on a preset loss function; adjusting parameters of the initial denoising model based on the error; and in response to the initial denoising model with adjusted parameters meeting a preset training termination condition, determining the current initial denoising model as the trained denoising model.

In some optional implementations, the determining an error between the sample denoised photon statistics map and the reference photon statistics map based on a preset loss function includes: calculating loss values for the sample denoised photon statistics map and the reference photon statistics map based on at least one preset loss function to obtain at least one loss value, wherein the at least one loss function includes at least one of: a main task loss function, a distribution similarity loss function, a sparsity loss function, and a physical prior constraint loss function; and performing a weighted summation on the at least one loss value to obtain the error between the sample denoised photon statistics map and the reference photon statistics map.

The present exemplary apparatus embodiment and the above exemplary method section correspond to each other in implementation. The corresponding content between the two may be mutually referenced, combined, and cited, and will not be repeated herein. The beneficial technical effects corresponding to the present exemplary apparatus embodiment may refer to the corresponding beneficial technical effects in the above exemplary method section, and will not be repeated herein.

### Exemplary System

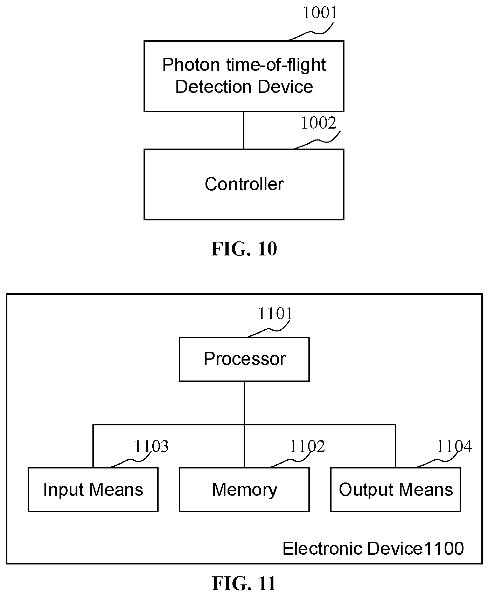

FIG. 10 is a structural diagram of a depth detection system in accordance with an embodiment of the present disclosure. The system includes: a photon time-of-flight detection device 1001 and a controller 1002, the photon time-of-flight detection device and the controller being communicatively connected.

The photon time-of-flight detection device is configured to collect a number of reflected photons for a target scene, and generate a to-be-denoised photon statistics map based on the number of reflected photons.

As an example, the photon time-of-flight detection device may be a dToF lidar, which may emit photons toward a target scene, receive photons reflected by objects in the target scene, and count the number of photons over time.

The controller is configured to execute the above depth detection method based on the to-be-denoised photon statistics map.

The controller may be a controller in various application scenarios, for example, a controller on a vehicle, or a controller of a dedicated ranging device.

The depth detection system in accordance with this embodiment, by applying the above depth detection method, may fully extract multi-scale features of the to-be-denoised photon statistics map and preserve detail information, effectively suppress noise and correct errors caused by multipath interference in photon flight, thereby eliminating interference signals generated at various positions such as corners in a space and edges of objects, enabling more accurate denoising of the photon statistics map, and further improving the accuracy of the depth map generated for the target scene.

### Exemplary Electronic Device

FIG. 11 is a structural diagram of an electronic device 1100 in accordance with an embodiment of the present disclosure, including at least one processor 1101 and a memory 1102.

The processor 1101 may be a Central Processing Unit (CPU) or a processing unit in other forms having data processing capability and/or instruction execution capability, and may control other components in the electronic device 1100 to perform desired functions.

The memory 1102 may include one or more computer program products, and the computer program products may include various forms of computer-readable storage media, such as volatile memory and/or non-volatile memory. The volatile memory may include, for example, Random Access Memory (RAM) and/or cache memory. The non-volatile memory may include, for example, Read-Only Memory (ROM), hard disk, flash memory, etc. One or more computer program instructions may be stored on the computer-readable storage medium, and the processor 1101 may run one or more computer program instructions to implement the depth detection method of the various embodiments of the present disclosure described above and/or other desired functions.

In one example, the electronic device 1100 may further include: an input means 1103 and an output means 1104, and these components are interconnected through a bus system and/or other forms of connection mechanisms (not shown).

The input means 1103 may also include, for example, a keyboard, a mouse, and the like.

The output device 1104 may output various information to the outside and may include, for example, a display, a speaker, a printer, and a communication network and remote output devices connected thereto, and the like.

Of course, for simplicity, FIG. 11 only shows some of the components in the electronic device 1100 that are related to the present disclosure, and omits components such as buses, input/output interfaces, and the like. In addition, the electronic device 1100 may further include any other suitable components depending on specific application circumstances.

### Exemplary Computer Program Product and Computer-Readable Storage Medium

In addition to the above method and device, in the embodiments of the present disclosure, there may also be provided a computer program product, comprising computer program instructions which, when run by a processor, cause the processor to execute the steps in the depth detection method of the various embodiments of the present disclosure described in the above "Exemplary Method" section.

The computer program product may be written in any combination of one or more programming languages to write program code for performing the operations of the embodiments of the present disclosure. The programming languages include object-oriented programming languages, such as Java, C++, and the like, and also include conventional procedural programming languages, such as the "C" language or similar programming languages. The program code may execute entirely on a user computing device, partly on the user device, as a stand-alone software package, partly on the user computing device and partly on a remote computing device, or entirely on a remote computing device or server.

Furthermore, the embodiments of the present disclosure may also be a computer-readable storage medium having computer program instructions stored thereon which, when run by a processor, cause the processor to execute the steps in the depth detection method of the various embodiments of the present disclosure described in the above "Exemplary Method" section.

The computer-readable storage medium may employ any combination of one or more readable media. The readable medium may be a readable signal medium or a readable storage medium. The readable storage medium may include, for example but not limited to, an electric, magnetic, optical, electromagnetic, infrared, or semiconductor system, apparatus, or device, or any combination of the above. More specific examples (a non-exhaustive list) of the readable storage medium include: an electrical connection having one or more wires, a portable disk, a hard disk, Random Access Memory (RAM), Read-Only Memory (ROM), Erasable Programmable Read-Only Memory (EPROM or flash memory), an optical fiber, a portable Compact Disc Read-Only Memory (CD-ROM), an optical storage device, a magnetic storage device, or any suitable combination of the above.

The basic principles of the present disclosure have been described above in conjunction with specific embodiments. However, the advantages, benefits, effects, and the like mentioned in the present disclosure are only examples and not limitations, and should not be considered as necessary for each of the embodiments of the present disclosure. Additionally, the specific details disclosed above are only for the purpose of illustration and ease of understanding, and are not limitations. The above details do not limit the present disclosure to necessarily adopting the above specific details for implementation.

Those skilled in the art may make various modifications and variations to the present disclosure without departing from the spirit and scope of the present application. Thus, if such modifications and variations of the present application fall within the scope of the claims of the present disclosure and their equivalents, the present disclosure is also intended to encompass these modifications and variations.

## Claims

1. A depth detection method, comprising:
obtaining a to-be-denoised photon statistics map generated for a target scene, wherein for any pixel in the to-be-denoised photon statistics map corresponding to a photon statistics data sequence, photon statistics data in the photon statistics data sequence is used to characterize a number of reflected photons obtained by counting the reflected photons received at a corresponding time point from a target position being a position corresponding to the pixel in the target scene;
encoding the to-be-denoised photon statistics map using an encoder included in a pre-trained denoising model to obtain encoded data;
performing computation on the encoded data using a bottleneck layer included in the denoising model to obtain to-be-decoded data;
decoding the to-be-decoded data using a decoder included in the denoising model to obtain a denoised photon statistics map; and
generating a depth map corresponding to the target scene based on peak data corresponding to pixels in the denoised photon statistics map.

2. The method according to claim 1, wherein the obtaining a to-be-denoised photon statistics map generated for a target scene comprises:
obtaining, by a photon time-of-flight detection device, a photon statistics map collected for the target scene; and
performing dimensional conversion and normalization on the photon statistics map to obtain the to-be-denoised photon statistics map.

3. The method according to any one of claims 1-2, wherein the encoder, the bottleneck layer, and the decoder are serially connected with each other.

4. The method according to any one of claims 1-3, wherein the encoder comprises at least one downsampling layer serially connected, and the decoder comprises at least one upsampling layer and an output layer serially connected;
the encoding the to-be-denoised photon statistics map using an encoder included in a pre-trained denoising model to obtain encoded data comprises:
performing layer-by-layer downsampling on the to-be-denoised photon statistics map using the at least one downsampling layer to obtain the encoded data; and
the decoding the to-be-decoded data using a decoder included in the denoising model to obtain a denoised photon statistics map comprises:
performing layer-by-layer upsampling on the to-be-decoded data using the at least one upsampling layer to obtain the denoised photon statistics map.

5. The method according to any one of claims 1-4, wherein the generating a depth map corresponding to the target scene based on peak data corresponding to each pixel in the denoised photon statistics map comprises:
for any pixel in the denoised photon statistics map, if a denoised photon statistics data sequence corresponding to the pixel has peak data, determining a target time point at which the peak data corresponding to the pixel is located; and calculating a depth value corresponding to the pixel based on the target time point, a preset speed value of light, and a time bin width corresponding to the to-be-denoised photon statistics map; and
generating the depth map corresponding to the target scene based on the depth values respectively corresponding to the obtained pixels.

6. The method according to claim 5, wherein the calculating a depth value corresponding to the pixel based on the target time point, a preset speed value of light, and a time bin width corresponding to the to-be-denoised photon statistics map comprises:
determining a time difference between the target time point and a preset time offset; and
calculating the depth value corresponding to the pixel based on the time difference, the speed value of light, and the time bin width.

7. The method according to any one of claims 1-6, wherein the denoising model is pre-trained according to the following steps:
obtaining a sample photon statistics map and a corresponding reference photon statistics map, wherein the reference photon statistics map is a photon statistics map generated by annotating actual positions of objects in a sample scene;
inputting the sample photon statistics map into an initial denoising model to obtain a sample denoised photon statistics map;
determining an error between the sample denoised photon statistics map and the reference photon statistics map based on a preset loss function;
adjusting parameters of the initial denoising model based on the error; and
in response to the initial denoising model with adjusted parameters meeting a preset training termination condition, determining the current initial denoising model as the trained denoising model.

8. The method according to claim 7, wherein the determining an error between the sample denoised photon statistics map and the reference photon statistics map based on a preset loss function comprises:
calculating loss values for the sample denoised photon statistics map and the reference photon statistics map based on at least one preset loss function to obtain at least one loss value, wherein the at least one loss function comprises at least one of: a main task loss function, a distribution similarity loss function, a sparsity loss function, and a physical prior constraint loss function; and
performing a weighted summation on the at least one loss value to obtain the error between the sample denoised photon statistics map and the reference photon statistics map.

9. A depth detection apparatus, comprising:
an obtaining module, configured to obtain a to-be-denoised photon statistics map generated for a target scene, wherein for any pixel in the to-be-denoised photon statistics map corresponding to a photon statistics data sequence, photon statistics data in the photon statistics data sequence is used to characterize a number of reflected photons obtained by counting the reflected photons received at a corresponding time point from a target position being a position corresponding to the pixel in the target scene;
an encoding module, configured to encode the to-be-denoised photon statistics map using an encoder included in a pre-trained denoising model to obtain encoded data;
a computation module, configured to perform computation on the encoded data using a bottleneck layer included in the denoising model to obtain to-be-decoded data;
a decoding module, configured to decode the to-be-decoded data using a decoder included in the denoising model to obtain a denoised photon statistics map; and
a generation module, configured to generate a depth map corresponding to the target scene based on peak data corresponding to pixels in the denoised photon statistics map.

10. The depth detection apparatus according to claim 9, wherein obtaining module comprises:
an obtaining unit, configured to obtain a photon statistics map collected by a photon time-of-flight detection device for the target scene; and
a preprocessing unit, configured to perform dimensional conversion and normalization on the photon statistics map to obtain the to-be-denoised photon statistics map.

11. The depth detection apparatus according to any one of claims 9-10, wherein the encoder, the bottleneck layer, and the decoder are serially connected with each other.

12. The depth detection apparatus according to any one of claims 9-11, wherein the encoder comprises at least one serially connected downsampling layer, and the decoder comprises at least one serially connected upsampling layer and an output layer; and
wherein the encoding module is further configured to perform layer-by-layer downsampling on the to-be-denoised photon statistics map using the at least one downsampling layer to obtain the encoded data; and
wherein the decoding module is further configured to perform layer-by-layer upsampling on the to-be-decoded data using the at least one upsampling layer to obtain the denoised photon statistics map.

13. A depth detection system, comprising: a photon time-of-flight detection device and a controller, the photon time-of-flight detection device and the controller being communicatively connected;
wherein the photon time-of-flight detection device is configured to collect a number of reflected photons for a target scene, and generate a to-be-denoised photon statistics map based on the number of the reflected photons; and
wherein the controller is configured to execute the depth detection method according to any one of claims 1 to 8 based on the to-be-denoised photon statistics map.

14. A computer-readable storage medium, storing a computer program thereon, which, when executed, is used to implement the depth detection method according to any one of claims 1 to 8.

15. An electronic device, the electronic device comprising:
a processor; and
a memory for storing executable instructions of the processor;
wherein the processor is configured to read the executable instructions from the memory and execute the instructions to implement the depth detection method according to any one of claims 1 to 8.
